# EUROPEAN PATENT APPLICATION

(11) **EP 4 768 709 A1**
(43) Date of publication of application: **01.07.2026**
(21) Application number: 24881611.8
(22) Date of filing: 22.10.2024
(51) Int. Cl.: F02N 11/12, B60S 5/04, H02J 7/00

(54) **POWER SUPPLY CIRCUIT AND EMERGENCY DEVICE**

(30) Priority: 23.10.2023 CN 202322843898 U; 23.10.2023 CN 202322859264 U; 13.05.2024 WO PCT/CN2024/092876
(71) Applicant: Shenzhen Carku Technology Co., Ltd., Shenzhen, Guangdong 518109 (CN)
(72) Inventor: LEI, Yun, Shenzhen, Guangdong 518000 (CN); ZHANG, Zhifeng, Shenzhen, Guangdong 518000 (CN); OUYANG, Mingxing, Shenzhen, Guangdong 518000 (CN)
(74) Representative: Huang, Liwei
(86) International application number: PCT/CN2024/126567
(87) International publication number: WO 2025/087246

(57) **Abstract**

The present invention provides a power supply circuit and an emergency device. The power supply circuit comprises a load interface for connecting a load; a power supply switch for connecting or disconnecting a circuit between an energy storage unit and the load interface; a main control circuit, configured to control the power supply switch to be in a state of connecting or disconnecting, so as to connect or disconnect a power supply path between the energy storage unit and the load. By utilizing the main control circuit, the control to the switch of power supply to load can be optimized. The power supply circuit and emergency equipment provided by the embodiment of the present invention can be compatible with the function of vehicle emergency ignition and the function of inflating tires, and can flexibly control the circuit(s) corresponding to the two functions to work. Meanwhile, the size of the emergency device can be reduced, which makes the product easy to carry, and the safety of emergency ignition can be improved.

## Description

### TECHNICAL FIELD

The present invention relates to the field of power supply technology, in particular to a power supply circuit and an emergency device.

### BACKGROUND ART

In a scenario of using a motor vehicle, starting the vehicle engine requires the battery to provide a starting current for ignition. However, when the battery is low on power, it cannot provide the starting current for the vehicle. On the other hand, when a tire pressure of the vehicle is insufficient, the normal driving of the vehicle will be greatly affected.

Therefore, in order to ensure a smooth driving of the vehicle, a vehicle owner often needs to prepare a starting power supply device (or a battery clamp device) for emergency power supply to the battery, as well as an air pump for inflating tires. However, carrying both of the starting power supply device and the air pump would take up a lot of space. Meanwhile, the process of using the air pump to inflate the tires also requires power supply support.

Moreover, the starting power supply devices on the current market have some problems. For example, the existing starting power supply devices require manual operation to control the power output, which is neither convenient nor intelligent. Additionally, if the starting power supply device is reversely connected to the battery, an ignition action may easily cause damage to the battery or even fire.

### SUMMARY OF INVENTION

The main purpose of the present invention is to provide a power supply circuit and an emergency device, aiming to use the main control circuit to optimize the control of power supply to the load. In addition, the function of vehicle emergency ignition and the function of inflating tires can be achieved in the same emergency device, and the two functions can be controlled centrally and also flexibly. Therefore, the size of the emergency device can be reduced, which makes the product easy to carry, and the safety of emergency ignition can be improved.

According to a first aspect, the present invention provides a power supply circuit, comprising:
a load interface for connecting a load;
a power supply switch for connecting or disconnecting a circuit between an energy storage unit and the load interface;
a main control circuit, configured to control the power supply switch to be in a state of connecting or disconnecting, so as to connect or disconnect a power supply path between the energy storage unit and the load.

According to a second aspect, the present invention provides a power supply circuit, comprising:
a load-interface circuit for connecting a load;
a power-supply switch circuit for connecting an energy storage unit to the load-interface circuit;
an air-pump switch circuit, which is provided in a power supply path formed by the energy storage unit and an air pump body;
a main control circuit, which is connected to the power-supply switch circuit and is connected to the air pump body; the main control circuit is configured to control the power-supply switch circuit to connect or disconnect the power supply path between the energy storage unit and the load, and is further configured to control the air-pump switch circuit to connect or disconnect the power supply path between the energy storage unit and the air pump body;
therein, the load comprises at least one selected from a starter and a vehicle battery.

According to a third aspect, The present invention further provides an emergency device, comprising a housing, an energy storage unit, and any one of the power supply circuits provided in the embodiments of the invention. The energy storage unit is located at least partially inside the housing. The power supply circuit is located at least partially inside the housing.

As above, the present invention provides a power supply circuit and an emergency device, comprising a main control circuit, thereby optimizing the control to the switch of power supply to the load.

For example, the present invention can reduce energy consumption during the ignition start function.

For example, the present invention can detect reverse connection of the load, so as to avoid a power supply to the load under reverse connection.

For example, the present invention can detect the status of the energy storage unit, so as to avoid a power supply if the power/voltage is too low.

For example, by using the design of trigger module(s) or trigger action(s), the present invention can easily switch between multiple functions and multiple modes.

In addition, the present invention has both a function of vehicle emergency ignition and a function of inflating tires, and can flexibly control the circuit(s) to operate corresponding to the two different functions. At the same time, the size of the emergency device is reduced, which makes the product easy to carry.

Furthermore, the present invention can improve the safety of emergency ignition.

### DESCRIPTION OF DRAWINGS

In order to more clearly illustrate the technical solutions of the embodiments of the present invention, the drawings used in the description of the embodiments will be briefly introduced as below. Evidently, the drawings described below are only some specific embodiments of the present invention. For those skilled in the art, more other drawings can be obtained based on these drawings without making any creative effort.
Fig. 1a is a schematic module diagram of a power supply circuit provided in an embodiment of the present invention;
Fig. 1b is a schematic module diagram of a power supply circuit provided in an embodiment of the present invention;
Fig. lc is a schematic module diagram of a power supply circuit provided in an embodiment of the present invention;
Fig. 2 is a schematic diagram of module structure of a power supply circuit provided in another embodiment of the present invention;
Fig. 3a is a schematic diagram of circuit structure of a power supply circuit provided in an embodiment of the present invention;
Fig. 3b is a schematic diagram of circuit structure of a power supply circuit provided in an embodiment of the present invention;
Fig. 4 is a schematic diagram of circuit structure of a first detection circuit in a power supply circuit provided in an embodiment of the present invention;
Fig. 5 is a schematic diagram of circuit structure of a first detection circuit in a power supply circuit provided in another embodiment of the present invention;
Fig. 6 is a schematic diagram of circuit structure of a second detection circuit in a power supply circuit provided in an embodiment of the present invention;
Fig. 7 is a schematic diagram of module structure of a power supply circuit provided in another embodiment of the present invention;
Fig. 8 is a schematic diagram of circuit structure of an air-pump switch circuit of a power supply circuit provided in an embodiment of the present invention;
Fig. 9 is a schematic module diagram of an emergency device provided in an embodiment of the present invention;
Fig. 10 is a schematic module diagram of an emergency device provided in another embodiment of the present invention.

Description of reference signs:
1, Power supply circuit; 2, Energy storage unit; 3, Load; 4, Air pump body; 5, Housing; 6, Emergency device; 10, Load-interface circuit; 20, Power-supply switch circuit; 30, Air-pump switch circuit; 40, Main control circuit; 50, First detection circuit; 60, Second detection circuit; 70, Alarm circuit; 80, Converting circuit; 91, First trigger module; 92, Second trigger module; 93, Third trigger module; 94, Fourth trigger module; B1, Positive input terminal; B2, Negative input terminal; P1, Positive output terminal; P2, Negative output terminal; K1, Third switch; Q1, Switching transistor; R1, First resistor; R2, Second resistor; R3, Third resistor; R4, Fourth resistor; R5, Fifth resistor; R6, Sixth resistor; R7, Seventh resistor; R8, Eighth resistor; R9, Ninth resistor; C1, First capacitor; C2, Second capacitor; V1, Power supply with a stabilized voltage; D1, Light source; D2, Light receiver; K1, First switch.

### DETAILED EMBODIMENTS

The present invention provides a power supply circuit, comprising:
a load interface for connecting a load;
a power supply switch for connecting or disconnecting a circuit between an energy storage unit and the load interface;
a main control circuit, configured to control the power supply switch to be in a state of connecting or disconnecting, so as to connect or disconnect a power supply path between the energy storage unit and the load.

The power supply circuit is so configured that if a certain preset condition is met, the main control circuit controls the power-supply switch circuit to be connected or disconnected. Thereby, the power supply from the energy storage unit to the load is connected or disconnected.

The load comprises at least one selected from a starter and a vehicle battery.

In use, the load may be a vehicle battery. When the energy storage unit of the present invention is connected to the vehicle battery, a common use may include starting the vehicle in an emergency or charging the vehicle battery.

In the prior art, only one power supply switch is generally provided. When the button for controlling the switch is pressed, the energy storage unit outputs power to the vehicle battery (in fact in a state of charging the vehicle battery). Then, when the vehicle ignition starts, power is also supplied for the ignition start, so as to complete the ignition start.

The inventors of the present invention have realized that such prior art would bring some problems. On one hand, today's energy supply devices and charging circuits are increasingly pursuing a fast charging speed. When the energy storage unit is charging the vehicle battery, the energy stored in the energy storage unit decreases rapidly. On the other hand, ignition itself does not require a large amount of electric energy. Once the ignition of gasoline car is success, the gasoline engine will automatically charge the car battery.

The present invention considers distinguishing between the two scenarios of "charging vehicle battery" and "ignition start", so as to prevent the energy storage unit from overcharging the vehicle battery under the "ignition start" function. This can reduce the consumption of the electric energy stored in the energy storage unit. The energy storage unit serves as an additional (emergency) power supply for the vehicle. If the electric energy stored therein is consumed too quickly, the energy storage unit has to be recharged frequently, and it is also more likely to encounter a problem of insufficient power in an emergency.

The embodiments provided by the present invention are as follows.

The present invention has a main control circuit, thereby utilizes the main control circuit to optimize the control to the switch of power supply to the load.

For example, a power supply circuit of the present invention comprises a first detection circuit. For example, the first detection circuit is located close to the load interface. For example, the first detection circuit is electrically connected to the load interface (e.g. an interface to be connected to the positive electrode of the load). If the load interface is connected to the vehicle, the power supply circuit of the present invention is able to detect an occurrence of an "ignition start" action through the first detection circuit. If the power supply circuit of the present invention detects the occurrence of "ignition start" action through the first detection circuit, the main control circuit controls the power supply switch to connect the circuit, and the energy storage unit supplies power to the load.

In some embodiments, if the power supply circuit of the present invention detects the occurrence of "ignition start" action through the first detection circuit, the main control circuit controls the power supply switch to be in a state of connecting, and maintains the connecting for a certain period of time T1 (T1 may be 1-10 seconds, such as 3 seconds, 5 seconds, or 7 seconds), and then the connecting is automatically switched to disconnecting. After the connecting has been maintained for a certain period of time, the ignition start would normally have been completed. Automatic disconnecting can prevent the energy storage unit from overcharging the vehicle battery, thereby reducing the consumption of electric energy stored in the energy storage unit.

If an ignition start action of an vehicle occurs, it causes the voltage of vehicle battery to drop in a short period of time.

Therefore, in some embodiments, the first detection circuit is configured to detect the value of the electrical signal at the load interface (which is connected to the vehicle battery), such as the voltage at the load interface (i.e., the positive voltage of the connected vehicle battery). If it is detected that the value of the electrical signal (e.g. voltage) at the load interface decreases by more than a preset threshold within a preset duration T0 (e.g. 2 milliseconds), the main control circuit controls the power supply switch to be in a state of connecting, so that the energy storage unit supplies power to the load, so as to complete the ignition start.

The "automatic disconnecting" in the present invention can be an unconditional automatic disconnecting, or a conditional automatic disconnecting, after a certain preset time T1 is reached. As an example of conditional automatic disconnecting, if the first preset time T1 is reached, a detection is automatically started. If the detection result meets a certain condition, the connecting is automatically switched to disconnecting. If the detection result does not meet the certain condition, the connecting is continued, without disconnecting. Then, after waiting for a second preset time T2, the detection is started again. Only if the detection result meets the certain condition, the connecting is automatically switched to disconnecting.

For example, after the power supply has been connected for a certain period of time T1, a load current is detected. If the load current is lower than a threshold, the connecting is switched to disconnecting.

In a specific embodiment, the power supply circuit of the present invention may comprise a current detection circuit for detecting the current supplied by the energy storage unit to the load. The current detection circuit may be located close to the load interface, for example, electrically connected to the load interface (e.g. to a negative electrode).

During the period when the energy storage unit supplies power to the load for vehicle ignition start, the current supplied to the load will be relatively large. After the vehicle ignition start has been completed, the current supplied to the load will be relatively small.

Therefore, the main control circuit of the present invention may be further configured such that if the "ignition start" action occurs, the main control circuit controls the power supply switch to be in a state of connecting, and maintains the connecting for a certain period of time (for a preset time, such as 3 seconds or 5 seconds). Then, a current supplied to the load is detected by the current detection circuit and is compared with a threshold. If the current supplied to the load is lower than the threshold, the main control circuit controls the power supply switch to be in a state of disconnecting, i.g., if it is detected that the current supplied to the load is much smaller than a working current of the vehicle ignition start, it is regarded that the ignition start work has been completed, thus the energy storage module stops supplying power to the load.

In order to distinguish between the two scenarios of "charging vehicle battery" and "ignition start", the present invention provides different switch operations for the two scenarios.

For example, the main control circuit of the present invention may be provided with one or more trigger modules. The trigger module may be a button switch, but is not limited thereto. As long as a unit can accept an user interaction so as to achieve a triggering, it can be used as the trigger module of the present invention. For example, a button switch, a rotary (or linear) mode selector, a selection through a touch screen, etc.

In an embodiment, in the "ignition start" mode, no operation/switch from a user is needed (operating a trigger module is not needed). In the "charging" mode, a manual operation/switch from a user is needed (operating a trigger module).

For example, if the load interface is connected to the vehicle battery, and the power supply circuit of the present invention detects the occurrence of the "ignition start" action through the first detection circuit (e.g. detecting that a value of an electrical signal, such as voltage, at the load-interface circuit decreases by more than a preset threshold within the first preset duration), the energy storage unit automatically supplies power to the load (for example, the connecting is maintained for a time period T1) wherein no triggering operation from a user is needed (operating a trigger module from a user is not needed). However, a user needs to trigger a trigger module (e.g. press a corresponding button S1) to enter a mode of "charging vehicle battery", therein the energy storage unit continuously supplies power to the load, until the user utilizes the trigger module (e.g. press the button S1 again) to cut off the power supply.

In another embodiment, the "ignition start" mode and the "charging" mode correspond to different trigger actions of a trigger module. For example, if the trigger module may comprise multiple buttons, pressing different buttons may correspond to different modes. If the trigger module may be a single button, one mode may correspond to a single click, and another mode may correspond to a quick double click. If the trigger module is a mode selector, two modes may correspond to two different selections. For example, a mode may be selected through a rotary (or linear) mode selector, or a touch screen.

For example, in the "charging" mode, when the load interface is connected to the vehicle battery, the energy storage unit directly supplies power to the load. In the "ignition start" mode, when the load interface is connected to the vehicle battery, the energy storage unit does not immediately supply power to the load. Instead, it would wait until the power supply circuit of the present invention detects the occurrence of the "ignition start" action through the first detection circuit (e.g. detecting that a value of an electrical signal, such as voltage, at the load-interface circuit decreases by more than a preset threshold within the first preset duration). Only then the energy storage unit would supply power to the load (for example, the connecting will be maintained for a time period T1).

The present invention may further provide an emergency device, which not only has the function of vehicle emergency ignition but also has the function of inflating a tire.

Therefore, the power supply circuit of the present invention may further comprise an air pump switch, and the main control circuit of the present invention is configured to control the air pump switch to be in a state of connecting or disconnecting.

If the air pump switch is in a state of connecting, the energy storage unit is able to supply power to the air pump. If the air pump switch is in a state of disconnecting, the energy storage unit stops supplying power to the air pump.

Similarly, the present invention may be provided with multiple modes. The multiple modes may comprise at least two selected from the three modes of "charging", "ignition start", and "air pump". Moreover, the present invention provides different switch operations for different modes.

In an embodiment, in the "ignition start" mode, no operation/switch from a user is needed (operating a trigger module is not needed). In the mode(s) of "charging" and/or "air pump", a manual operation/switch from a user is needed (operating a trigger module).

When the "charging" mode and the "air pump" mode exist at the same time, the "air pump" mode and "charging" mode may correspond to different trigger actions of the trigger module(s). For example, if a user triggers a first trigger module (e.g. press a button S1), the "charging mode" is entered, wherein the energy storage unit supplies power to the charging. If the user triggers another trigger module (e.g. press a button S2), the "air pump" mode is entered, wherein the energy storage unit supplies power to the air pump.

In an embodiment, for the modes of "ignition start," "air pump," and/or "charging", different modes correspond to different trigger actions of the trigger module(s).

Regarding how to use different trigger actions to trigger different modes, the solution can be similar to the preceding content, and can be referred to the preceding content, and will not be described again.

In particular, the power supply circuit of the present invention may not comprise an energy storage unit (i.e., the energy storage unit is located outside the power supply circuit, and is connected to power supply circuit from the outside of the power supply circuit), or may comprise an energy storage unit.

When the power supply circuit of the present invention comprise both a power supply switch (for supplying power to the load) and an air pump switch (for supplying power to the air pump), the power supply circuit of the present invention can be so designed that the load and the air pump are connected to the same energy storage unit (shared energy storage unit), or the load and the air pump are respectively connected to different energy storage units (respective energy storage unit).

The present invention prefers to use the design that the load and the air pump share the same energy storage unit, which can minimize the size/weight of the emergency device.

When the energy storage unit of the present invention is used for both "ignition start" and "air pump", the implementation of the "ignition start" mode in the present invention can reduce the consumption of electric energy stored in the energy storage unit during "ignition start", which thus alleviates the potential problem of insufficient power in the "air pump" mode, since the load and the air pump share the energy storage unit.

In order to optimize the power supply circuit of the present invention, the first detection circuit may comprise a circuit for detecting reverse connection. The circuit for detecting reverse connection is connected to the load interface. If the circuit for detecting reverse connection detects that the positive and negative electrodes of the load are reversedly connected, the power supply switch in the power supply circuit of the present invention is disconnected (e.g. the main control circuit is used to control the power supply switch to be in a state of disconnecting). At this time, even if a user performs a trigger action through the trigger module (e.g. press a button S1), the energy storage unit does not supply power to the load (the power supply switch is in a state of disconnecting).

In order to further optimize the power supply circuit of the present invention, the invention may further comprise a second detection circuit. The second detection circuit is connected to the energy storage unit and is configured to detect the status of the energy storage unit, such as remaining power and/or output voltage. If the detection result of the second detection circuit meets a certain preset condition (such as power/voltage is lower than a certain value), the main control circuit controls all or part of the output switches (such as the power supply switch, the air pump switch) to be in a state of disconnecting. Optionally, an alarm warning may be performed at the same time (e.g. a warning light is turned on, or a warning is shown in a display screen).

Those skilled in the art can understand that the control function of the main control circuit of the present invention can be realized by an electrical signal or by a circuit itself.

The electrical signal(s) may include digital signal(s) and/or analog signal(s), and may involve mutual conversion between digital signal(s) and analog signal(s). For example, the main control circuit of the present invention may comprise a microcontroller (MCU). For example, the main control circuit may comprise a programmable controller. Therein, through the electrical signal connection, the main control circuit receives a detection signal from the first detection circuit and/or the second detection circuit and sends a control command to the power supply switch and/or the air pump switch.

In addition, the main control circuit of the present invention can also achieve a control through the circuit itself. For example, the main control circuit of the present invention can be designed to receive electrical feedback (such as voltage or current, etc.) from the first detection circuit and/or the second detection circuit. And the main control circuit is able to connect/disconnect the power supply switch (such as a power-supply switch branch) and/or the air pump switch (such as an air-pump switch branch) according to the scenarios/conditions as described above/below.

Those skilled in the art can understand that the present invention is not limited to the above embodiments, nor to the specific embodiments of the following drawings. Each component of the present invention may be implemented in various ways as known to those skilled in the art, as long as the function of the present invention can be achieved.

In an embodiment, the present invention provides a power supply circuit, comprising:
a load-interface circuit for connecting a load;
a power-supply switch circuit for connecting the energy storage unit to the load-interface circuit;
an air-pump switch circuit, which is provided in the power supply path formed by the energy storage unit and the air pump body;
a main control circuit, which is connected to the power-supply switch circuit and is connected to the air pump body; the main control circuit is configured to control the power-supply switch circuit to connect or disconnect the power supply path between the energy storage unit and the load, and is further configured to control the air-pump switch circuit to connect or disconnect the power supply path between the energy storage unit and the air pump body;
therein, the load comprises at least one selected from a starter and a vehicle battery.

In some embodiments, the main control circuit is configured to control the power-supply switch circuit to disconnect the power supply path between the energy storage unit and the load, if it is detected that the load is reversely connected to the load-interface circuit.

In some embodiments, the power supply circuit comprises a first detection circuit. The first detection circuit is connected to the load-interface circuit and is connected to the main control circuit, and is configured to detect a value of an electrical signal at the load-interface circuit and to output a detection result to the main control circuit. The main control circuit is configured to determine that the load is reversely connected to the load-interface circuit if the value of the electrical signal at the load-interface circuit does not exceed a first threshold.

In some embodiments, the first detection circuit comprises an optocoupler. One terminal of the light source of the optocoupler is connected to the positive output terminal of the load-interface circuit, and another terminal of the light source is connected to ground. One terminal of the light receiver of the optocoupler is connected to the main control circuit and is connected to a preprovided power supply with a stabilized voltage (a constant voltage) and another terminal of the light receiver is connected to ground. If the positive output terminal of the load-interface circuit is connected to the negative terminal of the load, the light source is configured to emit a light signal to the light receiver, so as to make the light receiver in a state of connecting.

And/or, the first detection circuit comprises a comparator. An input terminal of the comparator is connected to the load-interface circuit, and an output terminal of the comparator is connected to the main control circuit.

And/or, the first detection circuit comprises a transistor. A first terminal of the transistor is connected to the positive output terminal of the load-interface circuit, a second terminal of the transistor is connected to the negative output terminal of the load-interface circuit, and the third terminal of the transistor is connected to the main control circuit.

In some embodiments, the main control circuit is configured to control the power-supply switch circuit to connect the power supply path between the energy storage unit and the load, if it is detected that the load performs a preset operation.

In some embodiments, the main control circuit is configured to determine that the load executes the preset operation, if it is detected that a value of an electrical signal at the load-interface circuit decreases by more than a preset threshold within a first preset duration.

In some embodiments, the main control circuit is further configured not to control the power-supply switch circuit to connect the power supply path between the energy storage unit and the load, if the voltage of the energy storage unit does not exceed a first preset voltage threshold; and/or,
the main control circuit is further configured to allow/control the power-supply switch circuit to connect the power supply path between the energy storage unit and the load, if the voltage of the energy storage unit exceeds the first preset voltage threshold.

In some embodiments, the main control circuit is further configured not to control the air-pump switch circuit to connect the power supply path between the energy storage unit and the air pump body, if the voltage of the energy storage unit does not exceed a second preset voltage threshold; and/or,
the main control circuit is further configured to allow/control the air-pump switch circuit to connect the power supply path between the energy storage unit and the air pump, if the voltage of the energy storage unit exceeds the second preset voltage threshold.

In some embodiments, the power supply circuit further comprises a second detection circuit, which is connected to the energy storage unit and is connected to the main control circuit, and is configured to detect the voltage of the energy storage unit and to output a detection result to the main control circuit.

In some embodiments, the main control circuit is configured to control the power-supply switch circuit to connect the power supply path between the energy storage unit and the load, in response to a first start signal; and/or,
the main control circuit is provided with a first trigger module, and the main control circuit is configured to control the power-supply switch circuit to connect the power supply path between the energy storage unit and the load, if the first trigger module is triggered by an external operation; and/or,
the main control circuit is configured to control the power-supply switch circuit to disconnect the power supply path between the energy storage unit and the load, in response to a first stop signal; and/or,
the main control circuit is provided with a second trigger module, and the main control circuit is configured to control the power-supply switch circuit to disconnect the power supply path between the energy storage unit and the load, if the second trigger module is triggered by an external operation.

In some embodiments, the main control circuit is configured to control the air-pump switch circuit to connect the power supply path between the energy storage unit and the air pump body, in response to a second start signal; and/or,
the main control circuit is provided with a third trigger module, and the main control circuit is configured to control the air-pump switch circuit to connect the power supply path between the energy storage unit and the air pump body, if the third trigger module is triggered by an external operation; and/or,
the main control circuit is configured to control the air-pump switch circuit to disconnect the power supply path between the energy storage unit and the air pump body, in response to a second stop signal; and/or,
the main control circuit is provided with a fourth trigger module, and the main control circuit is configured to control the air-pump switch circuit to disconnect the power supply path between the energy storage unit and the air pump body, if the fourth trigger module is triggered by an external operation.

In some embodiments, the main control circuit is further configured to control the power-supply switch circuit to disconnect the power supply path between the energy storage unit and the load, after the power-supply switch circuit has been connected for a second preset duration.

In some embodiments, the power supply circuit further comprises an alarm circuit, which is connected to the main control circuit. The main control circuit is further configured to control the alarm circuit to output an alarm signal, if it is detected that the energy storage unit is not correctly connected to the power-supply switch circuit, or that the voltage of the energy storage unit connected to the power-supply switch circuit does not exceed a preset voltage threshold, or that the load is reversely connected to the load-interface circuit.

In some embodiments, the air pump body is integrated into the power supply circuit. Therein, if the air-pump switch circuit connects the power supply path between the energy storage unit and the air pump body, the air pump body works under the power supply from the energy storage unit.

In some embodiments, the air-pump switch circuit comprises a switching transistor. One terminal of the air pump body is connected to a first terminal of the switching transistor, and another terminal of the air pump body is connected to the energy storage unit. A second terminal of the switching transistor is connected to ground. A control terminal of the switching transistor is connected to the main control circuit;

Therein, if the control terminal of the switching transistor receives a second signal, a power supply path is formed by the energy storage unit, the air pump body, and the switching transistor.

In some embodiments, the power supply circuit further comprises a converting circuit;
wherein the converting circuit is configured to connect the energy storage unit to the main control circuit, and to convert a power-supply voltage outputted by the energy storage unit into a working voltage, and to output the working voltage to the main control circuit.

The present invention may be further provided with an emergency device, comprising an air-blowing device.

Therefore, the power supply circuit of the present invention may further comprise an air-blowing switch, and the main control circuit of the present invention is configured to control the air-blowing switch to be in a state of connecting or disconnecting.

If the air-blowing switch is in the state of connecting, the energy storage unit is able to supply power to the air-blowing device. If the air-blowing switch is in the state of disconnecting, the energy storage unit stops supplying power to the air-blowing device.

The present invention further provides an air-blowing device, comprising:
an air-blowing switch, connected to the main control circuit, wherein the main control circuit is configured to control the air-blowing switch;
a motor, connected to the air-blowing device and connected to an air pump, and configured to drive the air-blowing device and/or the air pump to operate.

During inflating and/or blowing, the air pump and the air-blowing device can be driven by the same motor. Hence, compared with the prior art, the present invention can save the space occupied by another additional motor, and thus can reduce the size of the housing, reduce the volume and weight of the apparatus for inflating and blowing, which facilitates the portability and use of the apparatus. In some other examples, the air pump and the air-blowing device can be driven by two different motors, respectively.

The air pump and the air-blowing device may be driven simultaneously or independently.

The main control circuit may be provided with at least one trigger module, allowing a user to select between at least two different modes.

Similarly, the present invention may be provided with multiple modes, which may comprise at least one selected from the four modes of "charging", "ignition start", "air pump", and "air blowing". The present invention provides different switch operations for different modes.

Of course, different modes may be provided with different switches or with the same switch. Different triggering actions may be used to trigger corresponding modes.

For example, different modes can be entered by triggering a trigger module for different times within a preset time. For example, within the preset time, the "charging" mode is entered by triggering the trigger module once; the "ignition start" mode is entered by triggering the trigger module twice; the "air pump" mode is entered by triggering the trigger module three times; and the "air blowing" mode is entered by triggering the trigger module four times.

The power supply circuit further comprises: if the trigger module is not triggered, an ignition start mode is the default; if the trigger module is triggered, a charging mode / an air pump mode / an air blowing mode is entered.

For example, compared with the air pump, the air pump provides a higher air pressure but a smaller air volume, while the air-blowing device provides a lower air pressure but a larger air volume. Preferably, the air-blowing device is used for inflating air mattresses, swimming rings, and inflatable toys, while the air pump is used for inflating tires.

The present invention further provides an emergency device, comprising a housing, an energy storage unit, and a power supply circuit as described in the present invention. In an exemplary embodiment, the energy storage unit and at least a part of the power supply circuit are located inside the same housing. In another exemplary embodiment, the energy storage unit and at least a part of the power supply circuit are located in different housings. In a preferred embodiment, the emergency device further comprises an air pump body.

The present invention further provides an emergency device, comprising a housing, an energy storage unit, and a power supply circuit as described in the present invention. In an exemplary embodiment, the energy storage unit and at least a part of the power supply circuit are located inside the same housing. In another exemplary embodiment, the energy storage unit and at least a part of the power supply circuit are located in different housings. In a preferred embodiment, the emergency device further comprises an air-blowing device. The air pump, the air-blowing device, and the motor are all provided inside the housing. The housing is provided with a first interface. The first interface is used for connecting to an external to-be-blown device. Therein, the first interface comprises a blowing hole, and the blowing hole is in communication with the air-blowing device, and is used for the air-blowing device to output air.

The present invention further provides an emergency device, comprising a housing, an energy storage unit, and a power supply circuit as described in the present invention. The energy storage unit and at least a part of the power supply circuit are located inside a housing. In a preferred embodiment, the emergency device further comprises an air pump body and an air-blowing device. In an exemplary embodiment, at least one selected from the air pump, the air-blowing device, and the motor is located inside the housing. The housing is provided with a first interface and a second interface. The first interface is used for connecting to an external to-be-blown device, and the second interface is used for connecting to an external to-be-inflated device. Therein, the first interface comprises a blowing hole, and the second interface comprises an air outlet hole. The blowing hole is in communication with the air-blowing device, and is used for the air-blowing device to output air. The air outlet hole is in communication with the air pump, and is used for the air pump to output air.

Below, the technical solutions in the embodiments of the present invention will be clearly and completely described with reference to the accompanying drawings in the embodiments of the present invention. Evidently, the described embodiments are only part of the embodiments of the present invention, rather than all of the embodiments. Based on the embodiments in the present invention, all other embodiments obtained by those skilled in the art without creative effort shall fall within the protection scope of the present invention.

The flowcharts shown in the accompanying drawings are only examples and do not necessarily include all contents and operations/steps, nor do they necessarily have to be performed in the order as described. For example, some operations/steps may be decomposed, combined, or partially merged, so the actual performing order may be changed according to actual conditions.

With reference to the accompanying drawings, some embodiments of the present invention will be described in detail below. The following embodiments and features in the embodiments may be combined with each other unless there is any conflict.

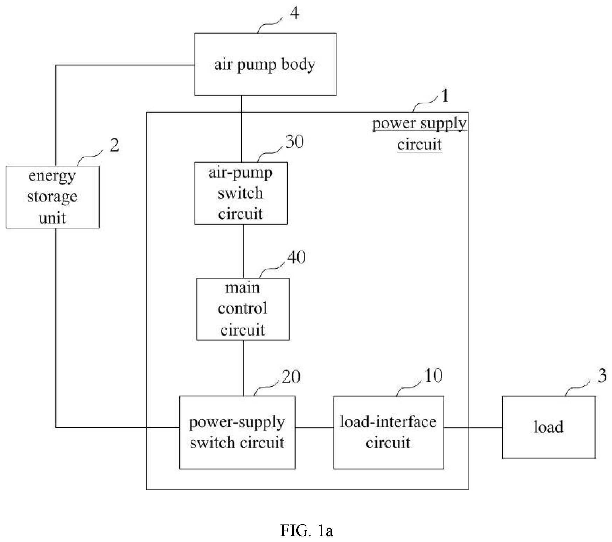

With reference to Fig. 1a, Fig. 1a is a schematic module diagram of a power supply circuit provided in an embodiment of the present invention.

As shown in Fig. 1a,, the power supply circuit 1 at least comprises the following circuit components: a load-interface circuit 10, a power-supply switch circuit 20, an air-pump switch circuit 30, and a main control circuit 40. Each component will be described in detail below.

To be specific, the load-interface circuit 10 is used for connecting a load 3. The power-supply switch circuit 20 is used for connecting an energy storage unit 2 to the load-interface circuit 10. The air-pump switch circuit 30 is provided in the power supply path formed by the energy storage unit 2 and an air pump body 4. Thus, if the load 3 is connected to the load-interface circuit 10 of the power supply circuit 1, the air pump body 4 is connected to the air-pump switch circuit 30, and the energy storage unit 2 is connected to the power supply circuit 1, the energy storage unit 2 will be connected to the load 3 through the power-supply switch circuit 20 and the load-interface circuit 10, besides, the energy storage unit 2, the air pump body 4, and the air-pump switch circuit 30 form a power supply path.

Therein, the load 3 comprises at least one selected from a starter and a vehicle battery.

Therein, the air pump body 4 is configured to perform inflating under the existence of a power supply input, such as inflating vehicle tires.

To be specific, the main control circuit 40 is configured to control the power-supply switch circuit 20 to connect or disconnect the power supply path between the energy storage unit 2 and the load 3, and to control the air-pump switch circuit 30 to connect or disconnect the power supply path between the energy storage unit 2 and the air pump body 4.

It should be noted that the power-supply switch circuit 20 can be switched between a state of connection and a state of disconnecting. The main control circuit 40 can output signals to the power-supply switch circuit 20: a first signal for instructing the power-supply switch circuit 20 to be in the state of connecting, and a second signal for instructing the power-supply switch circuit 20 to be in the state of disconnecting.

If the main control circuit 40 outputs the first signal to the power-supply switch circuit 20, the power-supply switch circuit 20 is switched to the state of connecting in response to the first signal, so that the power supply path, which is formed by the energy storage unit 2, the power-supply switch circuit 20, the load-interface circuit 10 and the load 3, is connected, and the energy storage unit 2 is able to supply power to the load 3. On the other hand, if the main control circuit 40 outputs the second signal to the power-supply switch circuit 20, the power-supply switch circuit 20 is switched to the state of disconnecting in response to the second signal, so that the power supply path, which is formed by the energy storage unit 2, the power-supply switch circuit 20, the load-interface circuit 10 and the load 3, is disconnected, and the energy storage unit 2 stops supplying power to the load 3.

Taking it as an example that the load 3 is at least one selected from a starter and a vehicle battery, if a vehicle cannot be normally started due to insufficient battery power, the energy storage unit 2 supplies power to the load 3 to assist the vehicle in an emergency ignition.

It should also be noted that the air-pump switch circuit 30 also can be switched between a state of connecting and a state of disconnecting. The main control circuit 40 can output signals to the air-pump switch circuit 30: a third signal for instructing the air-pump switch circuit 30 to be in the state of connecting, and a fourth signal for instructing the air-pump switch circuit 30 to be in the state of disconnecting.

If the main control circuit 40 outputs the third signal to the air-pump switch circuit 30, the air-pump switch circuit 30 is switched to the state of connecting in response to the third signal, so that the power supply circuit 1 formed by the energy storage unit 2, the air pump body 4, and the air-pump switch circuit 30 is connected, and the energy storage unit 2 supplies power to the air pump body 4, to support the air pump body 4 to perform inflating. On the other hand, if the main control circuit 40 outputs the fourth signal to the air-pump switch circuit 30, the air-pump switch circuit 30 is switched to the state of disconnecting, and the energy storage unit 2 stops supplying power to the air pump body 4.

The embodiments of the present invention provides a power supply circuit 1, which has both the function of vehicle emergency ignition and the function of inflating tires, and is able to centrally control the corresponding circuit(s) of the two functions to be connected or disconnected, thereby flexibly control the two functions of the power supply circuit 1. Thus, the circuit structure of the power supply circuit 1 is optimized and the circuit volume is reduced.

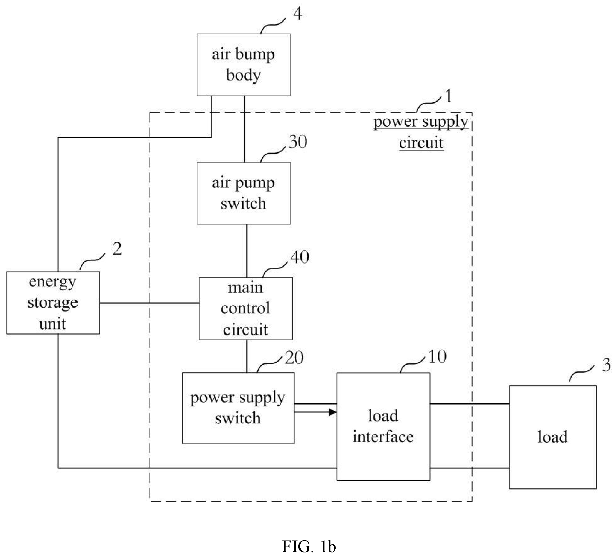

Fig. 1b is a schematic module diagram of a power supply circuit provided in an embodiment of the present invention. In the embodiment, the air pump 4 and the load 3 share the same energy storage unit 2. The power supply circuit 1 has an air-pump switch branch (having an air pump switch 30) and a power-supply switch branch (having a power supply switch 20). The main control circuit 40 is located at an intersection of the air-pump switch branch and the power-supply switch branch, so that the main control circuit 40 is able to control the air-pump switch branch to be connected/disconnected and to control the power-supply switch branch to connected/disconnected. As shown in Fig. 1b, a first port of the main control circuit 40 is electrically connected to the energy storage unit 2; a second port of the main control circuit 40 is electrically connected to the air pump switch 30; a third port of the main control circuit 40 is electrically connected to the power supply switch 20.

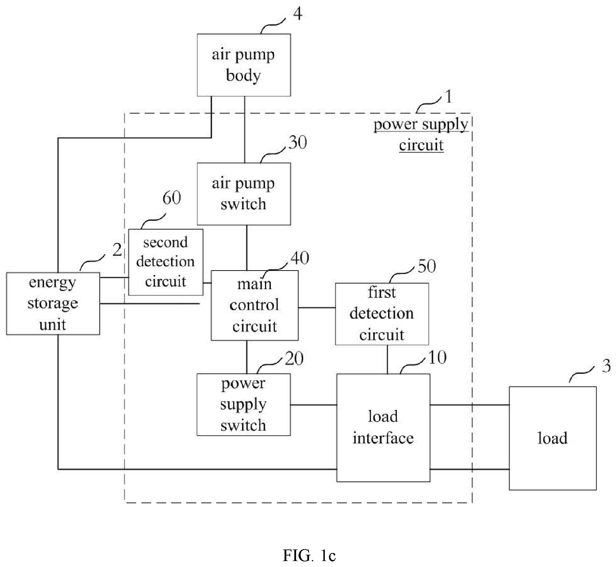

Fig. lc is a schematic module diagram of a power supply circuit provided in an embodiment of the present invention. Compared with Fig. 1b, Fig. 1c further comprises a first detection circuit 50 and/or a second detection circuit 60, which are is/electrically connected to the main control circuit 40.

The first detection circuit 50 is electrically connected to the load interface 10. Therefore, The first detection circuit 50 is able to detect the electrical status (e.g. voltage) of the load interface 10. For example, the first detection circuit is able to detect the occurrence of "ignition start" on the load and/or the "reverse connection" of the positive and negative electrodes of the load.

The second detection circuit 60 is electrically connected to the energy storage unit 2, therefore, the second detection circuit 60 is able to detect the electrical status of the energy storage unit 2 (e.g. remaining power, output voltage, etc.).

Those skilled in the art can understand that, in the embodiment, the control function of the main control circuit can be achieved by circuit design. For example, the main control circuit of the present invention can be designed to receive electrical feedback (such as voltage or current, etc.) from the first detection circuit/the second detection circuit, so as to connect/disconnect the power-supply switch branch or the air-pump switch branch. In the present invention, the results of connecting/disconnecting brought about by the detection circuit and the main control circuit under certain scenarios/conditions, are described as above/below. Those skilled in the art can understand that the present invention is not limited to a specific circuit design, as long as those skilled in the art know how to achieve the control functions described in the present invention.

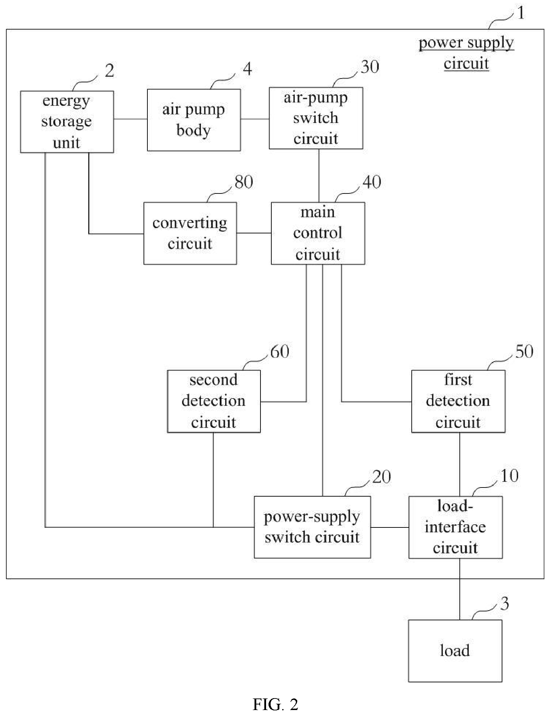

With reference to Fig. 2, Fig. 2 is a schematic diagram of module structure of another embodiment of a power supply circuit provided in the present invention.

As shown in Fig. 2, in some embodiments, the power supply circuit 1 further comprises an energy storage unit 2, which is connected to an power-supply switch circuit 20. That is to say, the energy storage unit 2 is part of the power supply circuit 1.

As shown in Fig. 2, in some embodiments, the power supply circuit 1 further comprises an air pump body 4. A power supply path is formed by the energy storage unit 2, the air pump body 4, and an air-pump switch circuit 30. That is to say, the air pump body 4 is part of the power supply circuit 1.

It should be noted that the above two embodiments can be combined. That is to say, both the energy storage unit 2 and the air pump body 4 can be provided in the power supply circuit 1 at the same time.

As shown in Figs. 1 to 2, in some embodiments, the main control circuit is configured to control the power-supply switch circuit 20 to disconnect the power supply path between the energy storage unit 2 and the load 3, if it is detected that the load 3 is reversely connected to the load-interface circuit 10.

To be specific, if the main control circuit 40 detects that the load 3 is reversely connected to the load-interface circuit 10, the main control circuit 40 outputs a second signal to the power-supply switch circuit 20, so as to disconnect the power supply path between the energy storage unit 2 and the load 3.

Furthermore, when the load 3 is reversely connected to the load-interface circuit 10, even if a user instructs the main control circuit 40 to control the power-supply switch circuit 20 to be connected, the main control circuit 40 continues to output the second signal to the power-supply switch circuit 20, to keep the power-supply switch circuit 20 disconnected, thereby improving power supply safety.

Thus, the power supply circuit 1 provided in the embodiments of the present invention is able to sensitively detect whether there is an abnormality in the connection of the load 3, so as to avoid supplying emergency power to an abnormally connected load 3, thereby improving power supply safety.

As shown in Figs. 1 to 2, in some embodiments, if the main control circuit 40 receives an air-pump trigger signal, the main control circuit 40 outputs a third signal to the air-pump switch circuit 30, so as to connect the power supply path between the energy storage unit 2 and the air pump body 4, which enables the air pump body 4 to operate.

It should be noted that the air-pump trigger signal may be a trigger signal inputted from outside, or a trigger signal generated by the power supply circuit 1 in response to a user operation. For example, a trigger signal is generated, if a preset button in the power supply circuit 1 is triggered.

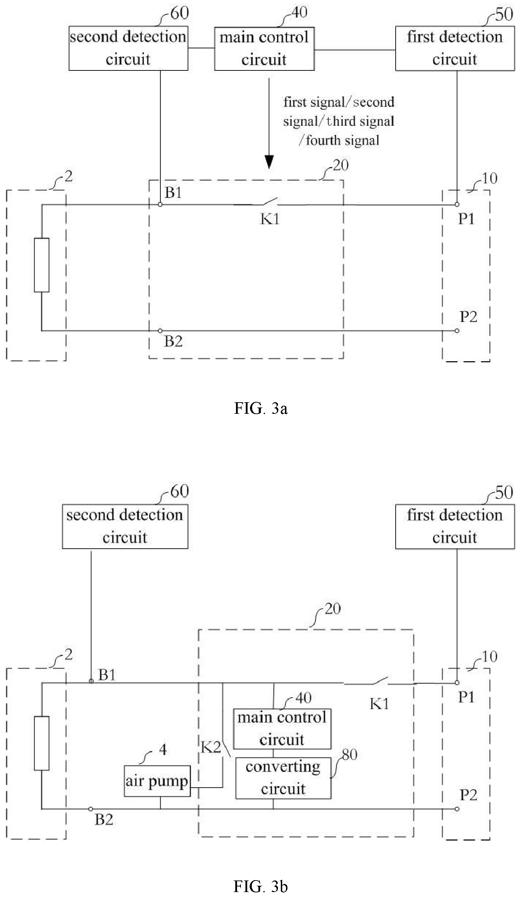

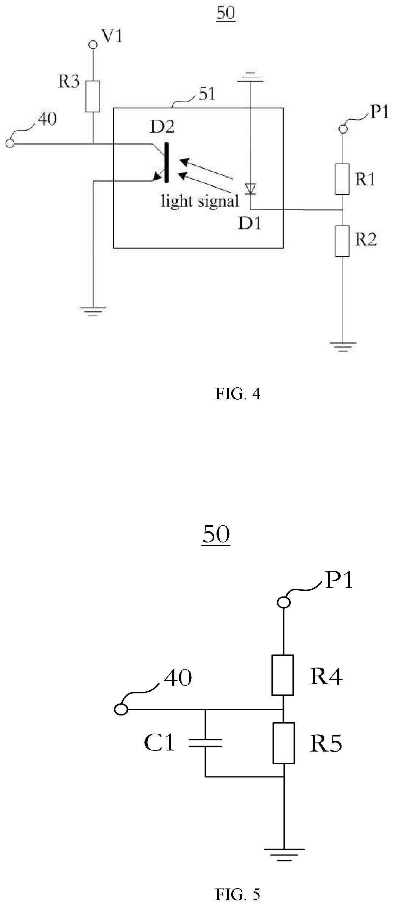

With reference to Figs. 3 to 4, the Fig. 3a or Fig. 3b is a schematic diagram of the circuit structure of a power supply circuit provided in an embodiment of the present invention. Fig. 4 is a schematic diagram of circuit structure of a first detection circuit in the power supply circuit provided in an embodiment of the present invention.

As shown in Fig. 3a, a main control circuit 40 obtains a detection result from a first detection circuit 50 and/or a second detection circuit 60, and the main control circuit 40 controls a power-supply switch circuit 20 to be connected/disconnected through signals (e.g. a first/second/third/fourth signal).

As shown in Fig. 3b, an energy storage unit 2 supplies power to a main control circuit (optionally through a converting circuit 80). The main control circuit 40 is electrically connected to a first detection circuit 50 / a second detection circuit 60 / a power supply switch K1 / an air pump switch K2. The main control circuit 40 receives a detection signal from the first detection circuit 50 and/or the second detection circuit 60, and sends a control command to the power supply switch K1 and/or the air pump switch K2, so as to control the switch in a state of connecting or disconnecting.

In an embodiment shown in Fig. 3b, the energy storage unit is connected to three branches: an air pump branch, a main control circuit branch, and a load branch. The three branches are connected in parallel. However, the present invention is not limited to this embodiment. For example, the main control circuit may be powered by an independent power supply device, instead of sharing the power supply device with the air pump branch / load branch. As shown in Figs. 1 to 4, in some embodiments, the power supply circuit 1 may comprise the first detection circuit 50. The first detection circuit 50 is connected to the load-interface circuit 10 and connected to the main control circuit 40. The first detection circuit 50 is configured to detect a value of an electrical signal at the load-interface circuit 10, and to output a detection result to the main control circuit 40.

The main control circuit 40 is configured to determine that the load 3 is reversely connected to the load-interface circuit 10, if the value of the electrical signal at the load-interface circuit 10 does not exceed a second threshold.

For example, the value of an electrical signal at the load-interface circuit 10 may be a voltage value or a current value at a point connected to the load-interface circuit 10. The detection result may be a specific numerical value of voltage or current, or be a high or low level. In some embodiments, the load-interface circuit 10 is provided with a positive output terminal P1 and a negative output terminal P2. The value of the electrical signal at the load-interface circuit 10 may include a voltage value at the positive output terminal P1 of the load-interface circuit 10.

To be specific, the positive output terminal P1 and the negative output terminal P2 in the load-interface circuit 10 are used to be connected to the positive electrode and the negative electrode of the load 3, respectively. Therein, if the load 3 is correctly connected to the load-interface circuit 10, the positive electrode of the load 3 is connected to the positive output terminal P1, and the negative electrode of the load 3 is connected to the negative output terminal P2.

Accordingly, the first detection circuit 50 may be specifically configured to detect a voltage value at the positive output terminal P1 as the value of the electrical signal at the load-interface circuit 10. Thus, the main control circuit 40 can sensitively detect whether there is an abnormality in the connection of the load 3, so as to avoid supplying emergency power to an abnormally connected load 3, thereby improving power supply safety.

As shown in Figs. 4, in some embodiments, a first detection circuit 50 comprises an optocoupler 51. The optocoupler 51 comprises a light source D1 for emitting a light signal under an drive of an input voltage, as well as a light receiver D2 having a state of connecting and a state of disconnecting. If a light signal is input, the light receiver D2 is switched to the state of connecting .

To be specific, one terminal of the light source D1 is connected to a positive output terminal P1 of a load-interface circuit 10, and another terminal of the light source D1 is connected to ground. One terminal of the light receiver D2 of the optocoupler 51 is connected to a main control circuit 40 and is connected to a preprovided power supply with a stabilized voltage V1, and another terminal of the light receiver D2 is connected to ground. If a positive output terminal P1 of the load-interface circuit 10 is connected to a negative electrode of the load 3, the light source D1 is configured to emit a light signal to the light receiver D2, which brings the light receiver D2 to a state of connecting.

To be specific, the anode of the light source D1 is connected to ground, and the cathode of the light source D1 is connected to the positive output terminal P1 of the load-interface circuit 10. If the voltage at the anode of the light source D1 exceeds that at the cathode by a preset difference, the light source D1 emits a light signal to the light receiver D2, which brings the light receiver D2 to a state of connecting.

Moreover, the first detection circuit 50 may further comprise a first resistor R1, a second resistor R2, and a third resistor R3. Therein, a first terminal of the first resistor R1 is connected to the positive output terminal P1 of the load-interface circuit 10; a second terminal of the first resistor R1 is connected to the light source D1 of the optocoupler 51; a first terminal of the second resistor R2 is connected to the second terminal of the first resistor R1; and a second terminal of the second resistor R2 is connected to ground. A first terminal of the third resistor R3 is connected to the power supply device with a stabilized voltage V1. A second terminal of the third resistor R3 is connected to the light receiver D2 of the optocoupler 51, and connected to the main control circuit 40.

The working principle of the above-mentioned first detection circuit 50 is explained as follows: if the load 3 is reversely connected to the load-interface circuit 10, the negative electrode of the load 3 is connected to the positive output terminal P1 of the load-interface circuit 10, the voltage at the cathode of the light source D1 will be less than 0, and the voltage at the anode of the light source D1 will exceed the voltage at the cathode by a preset difference. This will cause the light source D1 to emit a light signal to the light receiver D2, which brings the light receiver D2 to a state of connecting. If the main control circuit 40 detects that the voltage at the connection point between the main control circuit 40 and the light receiver D2 is pulled down, it is determined that the load 3 is reversely connected to the load-interface circuit 10.

On the contrary, if the load 3 is correctly connected to the load-interface circuit 10, the positive electrode of the load 3 is connected to the positive output terminal P1 of the load-interface circuit 10, the electrical signal at the positive output terminal P1 of the load-interface circuit 10 will be a high-level signal, and the voltage at the anode of the light source D1 will be less than the voltage at the cathode. Thus, the light source D1 will not emit a light signal, and the light receiver D2 will remain in the state of disconnecting. The main control circuit 40 detects that the voltage at the connection point between the main control circuit 40 and the light receiver D2 is stable.

On the other hand, if the load 3 is not connected to the load-interface circuit 10, the electrical signal at the positive output terminal P1 of the load-interface circuit 10 would be 0. Thus, the light source D1 will not emit a light signal, and the light receiver D2 will remain in the state of disconnecting. The main control circuit 40 detects that the voltage at the connection point between the main control circuit 40 and the light receiver D2 is stable.

Therefore, if the main control circuit 40 detects that the voltage at the connection point between the main control circuit 40 and the light receiver D2 is stable, it is determined that the load 3 is correctly connected to the load-interface circuit 10 or is not connected at all. If the main control circuit 40 detects that the voltage at the connection point between the main control circuit 40 and the light receiver D2 is pulled down, it is determined that the load 3 is reversely connected to the load-interface circuit 10. This can sensitively detect whether there is any abnormality in the connection of the load 3, so as to avoid supplying emergency power to an abnormally connected load 3, thereby improving power supply safety.

In some other embodiments, the first detection circuit 50 may comprise a comparator. The input terminal of the comparator is connected to the load-interface circuit 10, and the output terminal of the comparator is connected to the main control circuit 40.

To be specific, the comparator may comprise a positive input terminal, a negative input terminal, and an output terminal. Therein, the comparator is used to compare a signal strength of a signal inputted to the positive input terminal with a signal strength of a signal inputted to the negative input terminal, and a signal matching the comparison result is outputted from the output terminal of the comparator as a detection result.

For example, the positive input terminal of the comparator is connected to the positive output terminal P1 of the load-interface circuit 10, so as to obtain a value of an electrical signal at the load-interface circuit 10. The negative input terminal of the comparator is connected to a preset reference power supply.

If the load 3 is correctly connected to the load-interface circuit 10, the positive electrode of the load 3 is connected to the positive output terminal P1 of the load-interface circuit 10, and the negative electrode of the load 3 is connected to the negative output terminal P2 of the load-interface circuit 10. Thus, the signal strength at the positive input terminal of the comparator is greater than the signal strength at the negative input terminal, and the comparator outputs a corresponding high-level signal from the output terminal, so that the main control circuit 40 determines that the load 3 is correctly connected to the load-interface circuit 10.

On the contrary, if the load 3 is reversely connected to the load-interface circuit 10, the positive electrode of the load 3 is connected to the negative output terminal P2 of the load-interface circuit 10, and the negative electrode of the load 3 is connected to the positive output terminal P1 of the load-interface circuit 10. Thus, the signal strength at the positive input terminal of the comparator is less than the signal strength at the negative input terminal, and the comparator outputs a corresponding low-level signal from the output terminal, so that the main control circuit 40 determines that the load 3 is reversely connected to the load-interface circuit 10.

In some other embodiments, the first detection circuit 50 may comprise a transistor. A first terminal of the transistor is connected to the positive output terminal P1 of the load-interface circuit 10, so as to obtain a value of an electrical signal at the load-interface circuit 10. A second terminal of the transistor is connected to the negative output terminal P2 of the load-interface circuit 10, and a third terminal of the transistor is connected to the main control circuit 40.

To be specific, the signal strength at the third terminal of the transistor matches the difference in signal strength between the first terminal and the second terminal, thus the main control circuit 40 is able to detect the signal at the third terminal of the transistor, so as to determine whether a value of an electrical signal at the load-interface circuit 10 exceeds a second threshold and to determine whether the load 3 is reversely connected to the load-interface circuit 10.

With reference to Fig. 5, Fig. 5 is a schematic diagram of the circuit structure of a first detection circuit in a power supply circuit provided in an embodiment of the present invention.

In the embodiment, a first detection circuit 50 is able to detect an occurrence of an ignition start action of a vehicle.

For example, the first detection circuit 50 at least has two resistors in series, i.e. resistor R4 and resistor R5. One terminal is connected to a load interface P1, and is to be connected to a positive electrode of the load. Another terminal is connected to ground. Therein, a divided voltage of one of the resistors (the resistor R5) is used as an input signal to the main control circuit 40.

Preferably, the first detection circuit 50 further comprises a capacitor C1, which is connected with the resister R5 in parallel, which can prevent a transient current from being too high and protect electrical components.

To be specific, the first detection circuit 50 comprises a fourth resistor R4, a fifth resistor R5, and a first capacitor C1. A first terminal of the fourth resistor R4 is connected to the positive output terminal P1, and a second terminal of the fourth resistor R4 is connected to a first terminal of the fifth resistor R5. A second terminal of the fifth resistor R5 is connected to ground.

The main control circuit 40 is connected to the second terminal of the fourth resistor R4 and is connected to the first terminal of the fifth resistor R5.

A first terminal of the first capacitor C1 is connected to the first terminal of the fifth resistor R5, and a second terminal of the first capacitor C1 is connected to the second terminal of the fifth resistor R5.

The working principle of the above-mentioned first detection circuit 50 is explained as follows: if the load 3 is correctly connected to the load-interface circuit 10, the positive electrode of the load 3 is connected to the positive output terminal P1, and is connected to ground, through the positive output terminal P1, the fourth resistor R4 and the fifth resistor R5 in sequence. The fourth resistor R4 and the fifth resistor R5 cooperate to divide the voltage of the positive output terminal P1, so that a corresponding divided voltage is obtained, and the divided voltage is used as a detection result and is outputted to the main control circuit 40. Based on the detection result, the main control circuit 40 obtains the value of the electrical signal at the load-interface circuit 10.

The first capacitor C1 and the fifth resistor R5 are connected in parallel, which aims to absorb voltage fluctuations that may occur at the load interface circuit 10, so as to buffer the divided voltage and protect electronic components.

In some embodiments, the main control circuit 40 is used to control a power-supply switch circuit 20 to connect the power supply path between the energy storage unit 2 and the load 3, if it is detected that the load 3 performs a preset operation.

To be specific, if the main control circuit 40 detects that the load 3 performs a preset operation, the main control circuit 40 outputs a first signal to the power-supply switch circuit 20, so as to control power-supply switch circuit 20 to connect the power supply path between the energy storage unit 2 and the load 3.

For example, in the embodiment, a preset operation may include but may not be limited to: the load 3 performing an ignition action.

Taking it as an example that the load 3 is at least one selected from a starter and a vehicle battery, if the load 3 is connected to the load-interface circuit 10 and the vehicle performs an ignition action, a value of an electrical signal at the connection point between the load-interface circuit 10 and the load 3 will fluctuate significantly in a short period of time. Thus, the main control circuit 40 is able to detect that the load 3 is performing a preset operation, such as an ignition action, based on the value of the electrical signal at the load-interface circuit 10.

Furthermore, if the load 3 is reversely connected to the load-interface circuit 10, even if the load 3 performs a preset operation, the main control circuit 40 continues to output a second signal to the power-supply switch circuit 20, to keep the power-supply switch circuit 20 disconnected, thereby improving power supply safety.

Therefore, the power supply circuit 1 provided in the embodiments of the present invention is able to automatically control to connect the power supply path between the energy storage unit 2 and the load 3, if it is detected that the load 3 performs a preset operation. Thus, it is able to sensitively respond to the operation of the load 3, control the power supply circuit 1 to supply power to the load 3, and improve the user experience of using the power supply circuit to provide emergency power to a starter or a vehicle battery.

In some embodiments, the main control circuit is configured to determine that the load performs a preset operation, if it is detected that a value of an electrical signal at the load-interface circuit decreases by more than a preset threshold within a first preset duration.

Taking it as an example that the load 3 is at least one selected from a starter and a vehicle battery, if the load 3 is connected to the load-interface circuit 10 and the vehicle performs an ignition action, a value of an electrical signal at the connection point between the load 3 and the load-interface circuit 10 will decrease in a short period of time.

Therefore, if the value of the electrical signal at the load-interface circuit 10 decreases by more than a preset threshold within a first preset duration, it can indicate that the vehicle is performing an ignition action, and the main control circuit 40 can determine that the load 3 is performing a preset operation.

For example, a value of an electrical signal at the load-interface circuit 10 may be a voltage value or a current value, at a point connected to the load-interface circuit 10. For example, the first preset duration is 2 milliseconds, and the second electrical signal strength is 1 V. That is to say, if the voltage value at the connection point between the load 3 and the load-interface circuit 10 decreases by more than 1 V within 2 milliseconds, it is determined that the vehicle is performing an ignition action, and the main control circuit 40 can determine that the load 3 is performing a preset operation.

Thereby, the main control circuit 40 can sensitively detect whether the load 3 is performing an ignition action or not, and can automatically control the power supply circuit 1 to supply power to the load 3 in response to the ignition action.

In some embodiments, the main control circuit is further configured to control the power-supply switch circuit 20 to disconnect the power supply path between the energy storage unit 2 and the load 3, after the power-supply switch circuit 20 has been connected for a second preset duration.

To be specific, if the main control circuit 40 outputs a third signal to the power-supply switch circuit 20, the power-supply switch circuit 20 controls a first switch to be switched to a state of disconnecting, thereby disconnecting the power supply circuit, which connects the energy storage unit 2, the power-supply switch circuit 20, the load-interface circuit 10, and the load 3.

It should be understood that when the vehicle battery is low on power, the load 3 needs power support from the energy storage unit 2 to perform ignition. Nevertheless, after the load 3 has completed the ignition, the connection between the energy storage unit 2 and the load 3 can be disconnected. Therefore, the main control circuit 40 is further configured to output a third signal to the power-supply switch circuit 20 after the power-supply switch circuit 20 has been connected for the second preset duration, so that the power-supply switch circuit 20 will automatically disconnect the power supply path between the energy storage unit 2 and the load-interface circuit 10. This can save the power of the energy storage unit 2 and can improve the power supply safety of the energy storage unit 2, wherein no manual operation by a user is required.

In some embodiments, the main control circuit is further configured not to control the power-supply switch circuit 20 to connect the power supply path between the energy storage unit 2 and the load 3, if the voltage of the energy storage unit 2 does not exceed a first preset voltage threshold; and/or,
the main control circuit is further configured to control the power-supply switch circuit 20 to connect the power supply path between the energy storage unit 2 and the load 3, if the voltage of the energy storage unit 2 exceeds the first preset voltage threshold.

It should be noted that the above two embodiments can be implemented separately or in combination.

An example is provided to illustrate a combination of the above two embodiments:

The main control circuit 40 obtains a voltage value of the energy storage unit 2. If the voltage value of the energy storage unit 2 does not exceed a first preset voltage threshold, even if the main control circuit 40 detects that the load 3 performs a preset operation or performs another operation inputted from outside, the main control circuit 40 will not output a first signal to the power-supply switch circuit 20, so as to keep the power-supply switch circuit 20 disconnected. If the voltage value of the energy storage unit 2 exceeds the first preset voltage threshold, the main control circuit 40 will allow/control the power-supply switch circuit 20 to connect the power supply path between the energy storage unit 2 and the load 3.

In some embodiments, the main control circuit is further configured not to control the air-pump switch circuit 30 to connect the power supply path between the energy storage unit 2 and the air pump body 4, if the voltage of the energy storage unit 2 does not exceed a second preset voltage threshold; and/or,

the main control circuit is further configured to allow/control the air-pump switch circuit 30 to connect the power supply path between the energy storage unit 2 and the air pump, if the voltage of the energy storage unit 2 exceeds the second preset voltage threshold.

It should be noted that the above two embodiments can be implemented separately or in combination.

An example is provided to illustrate a combination of the above two embodiments:

The main control circuit 40 obtains a voltage value of the energy storage unit 2. If the voltage value of the energy storage unit 2 does not exceed a second preset voltage threshold, even if the main control circuit 40 detects that the load 3 performs a preset operation or performs another operation inputted from outside, the main control circuit 40 will not output a third signal to the air-pump switch circuit 30, so as to keep the air-pump switch circuit 30 disconnected. If the voltage value of the energy storage unit 2 exceeds the second preset voltage threshold, the main control circuit 40 will allow/control the air-pump switch circuit 30 to connect the power supply path.

It should also be noted that the first preset voltage threshold and the second preset voltage threshold can be set as the same value or different values, which is not specifically limited here.

It should be understood that if the voltage of the energy storage unit 2 does not exceed the first/second preset voltage threshold, it may indicate an abnormality such as that the energy storage unit 2 has insufficient power, the energy storage unit 2 is not correctly connected to the power supply circuit 1, or the positive and negative electrodes of the energy storage unit 2 are short-circuited. In such cases, the main control circuit 40 controls the power-supply switch circuit 20 and/or the air-pump switch circuit 30 to remain disconnected, so as to avoid a useless connection of the power-supply switch circuit 20 and/or the air-pump switch circuit 30, and to avoid that an abnormal state of the energy storage unit 2a causes a damage to at least one from the energy storage unit 2, the power supply circuit 1, the load 3, and the air pump body 4.

Furthermore, if the voltage of the energy storage unit 2 does not exceed the first/second preset voltage threshold, the main control circuit 40 may further control a corresponding alarm circuit to output an alarm signal, so as to inform the user that the energy storage unit 2 is low on power, and to remind the user to replace the energy storage unit 2, to reconnect the energy storage unit 2 correctly, or to charge the energy storage unit 2 in time, which plays a role of protecting the energy storage unit 2, the power supply circuit 1, the load 3, and the air pump body 4.

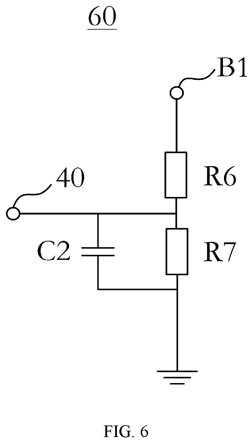

With reference to Fig. 6, Fig. 6 is a schematic diagram of circuit structure of a second detection circuit in a power supply circuit according to an embodiment of the present invention.

As shown in Fig. 3 and Fig. 6, in some embodiments, a power supply circuit 1 further comprises a second detection circuit 60. The second detection circuit 60 is connected to a energy storage unit 2 and connected to a main control circuit, and is configured to detect a voltage of the energy storage unit 2 and to output a detection result to the main control circuit. Based on the detection result, the main control circuit 40 obtains a voltage value of the energy storage unit 2.

To be specific, a power-supply switch circuit 20 is provided with a positive input terminal B1 and a negative input terminal B2, which are to be connected to the positive electrode and the negative electrode of the energy storage unit 2, respectively. If the energy storage unit 2 is correctly connected to the power-supply switch circuit 20, the positive electrode of the energy storage unit 2 is connected to the positive input terminal B1, and the negative terminal of the energy storage unit 2 is connected to the negative input terminal B2.

Accordingly, the second detection circuit 60 is specifically used to detect a voltage value at the positive input terminal B1, so as to obtain the voltage of the energy storage unit 2.

For example, the second detection circuit 60 at least has two resistors in series, i.e. resistor R6 and resistor R7. One terminal is connected to the positive electrode B1 of the energy storage unit 2. Another terminal is connected to ground. Therein, a divided voltage of one of the resistors (the resistor R7) is used as an input signal to the main control circuit 40.

Preferably, the second detection circuit 60 further comprises a capacitor C2, which is connected with the resister R7 in parallel, which can prevent a transient current from being too high and protect electrical components.

To be specific, the second detection circuit 60 comprises a sixth resistor R6, a seventh resistor R7, and a second capacitor C2. A first terminal of the sixth resistor R6 is connected to the positive input terminal B1, and a second terminal of the sixth resistor R6 is connected to a first terminal of the seventh resistor R7. A second terminal of the seventh resistor R7 is connected to ground. The main control circuit 40 is connected to the second terminal of the sixth resistor R6 and is connected to the first terminal of the seventh resistor R7. A first terminal of the second capacitor C2 is connected to the first terminal of the seventh resistor R7, and a second terminal of the second capacitor C2 is connected to the second terminal of the seventh resistor R7.

The working principle of the above-mentioned second detection circuit 60 is explained as follows:

If the energy storage unit 2 is correctly connected to the power-supply switch circuit 20, the positive electrode of the energy storage unit 2 is connected to the positive input terminal B1, and is connected to the ground, through the positive input terminal B1, the sixth resistor R6 and the seventh resistor R7 in sequence. The sixth resistor R6 and the seventh resistor R7 cooperate to divide the voltage of the positive electrode of the energy storage unit 2, so that a divided voltage of the energy storage unit 2 is obtained, and the divided voltage is used as a detection result and is outputted to the main control circuit 40. Based on the detection result, the main control circuit 40 obtains a voltage value of the energy storage unit 2.

The first capacitor C2 and the seventh resistor R7 are connected in parallel, which aims to absorb voltage fluctuations that may occur in the voltage of the energy storage unit 2 and in its divided voltage, so as to buffer the divided voltage and protect electronic components.

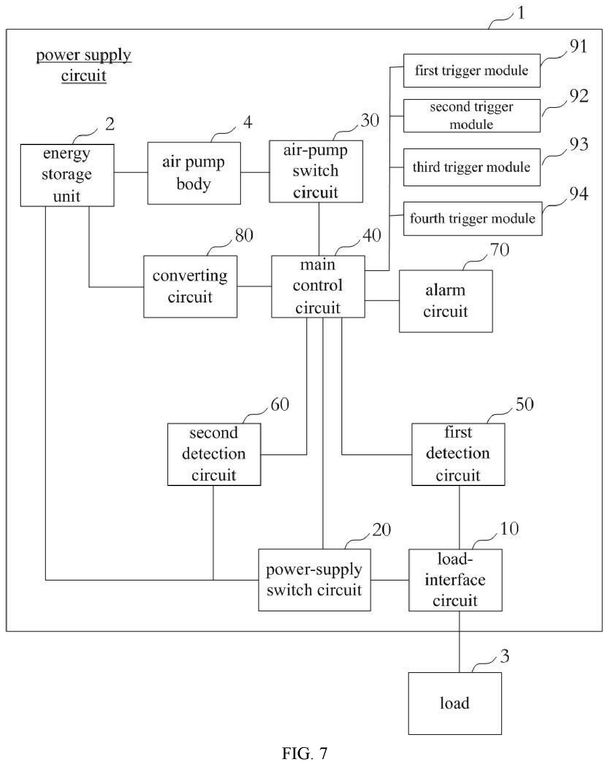

With reference to Fig. 7, Fig. 7 is a schematic diagram of module structure of a power supply circuit provided in another embodiment of the present invention.

As shown in Fig. 7, in some embodiments, a power supply circuit 1 provided in the present invention further comprises at least one trigger module. For example, the trigger module may include a first trigger module, a second trigger module, a third trigger module, and a fourth trigger module, which are electrically connected to a main control circuit 40. The first trigger module, the second trigger module, the third trigger module, and the fourth trigger module can be manually triggered, and the main control circuit 40 can detect whether each trigger module is triggered. If any trigger module is triggered, the main control circuit 40 can control the power supply circuit 1 to perform a function corresponding to the trigger module.

Therein, the first trigger module, the second trigger module, the third trigger module, and the fourth trigger module are, for example, buttons.

In some embodiments, the main control circuit is configured to control a power-supply switch circuit 20 to connect a power supply path between an energy storage unit 2 and a load 3, in response to a first start signal; and/or, the main control circuit is provided with a first trigger module, and the main control circuit is configured to control the power-supply switch circuit 20 to connect the power supply path between the energy storage unit 2 and the load 3, if the first trigger module is triggered by an external operation.

To be specific, a user can operate the first trigger module or manually input a first start signal to the main control circuit, so that the main control circuit 40 connects the power supply path between the energy storage unit 2 and the load 3, thereby achieving the function of manually starting the emergency power supply from the energy storage unit 2 to the load 3.

In some embodiments, the main control circuit is configured to control the power-supply switch circuit 20 to connect the power supply path between the energy storage unit 2 and the load 3, in response to a first stop signal; and/or,
the main control circuit is provided with a second trigger module, and the main control circuit is configured to control the power-supply switch circuit 20 to disconnect the power supply path between the energy storage unit 2 and the load 3, if the second trigger module is triggered by an external operation.

To be specific, if the power-supply switch circuit 20 is connected, and a user can operate the second trigger module or manually input a first stop signal to the main control circuit, so that the main control circuit 40 disconnects the power supply path between the energy storage unit 2 and the load 3, thereby achieving the function of manually stopping the emergency power supply from the energy storage unit 2 to the load 3. Thus, the user can easily interrupt the power supply process from the power supply circuit 1 to the energy storage unit 2, further improving the operational safety of the power supply circuit 1.

It should be understood that the first trigger module and the second trigger module may be the same trigger module, such as the same button.

In some embodiments, the main control circuit is used to control an air-pump switch circuit 30 to connect the power supply path between the energy storage unit 2 and an air pump body 4, in response to a second start signal; and/or,

the main control circuit is provided with a third trigger module, and the main control circuit is used to control the air-pump switch circuit 30 to connect the power supply path between the energy storage unit 2 and the air pump body 4, if the third trigger module is triggered by an external operation.

To be specific, if a user operates the third trigger module or manually inputs a second start signal to the main control circuit, so that the main control circuit 40 would connect the power supply path between the energy storage unit 2 and the air pump body 4, thereby achieving a function of manually starting the power supply from the energy storage unit 2 to the air pump body 4.

In some embodiments, the main control circuit is used to control the air-pump switch circuit 30 to disconnect the power supply path between the energy storage unit 2 and the air pump body 4 in response to a second stop signal; and/or,
the main control circuit is provided with a fourth trigger module, and the main control circuit is used to control the air-pump switch circuit 30 to disconnect the power supply path between the energy storage unit 2 and the air pump body 4, if the fourth trigger module is triggered by an external operation.

To be specific, if the air-pump switch circuit 30 is in state of connecting, and a user operates the fourth trigger module or manually inputs a second stop signal to the main control circuit, so that the main control circuit 40 would disconnect the power supply path between the energy storage unit 2 and the air pump body 4, thereby achieving a function of manually stopping the power supply from the energy storage unit 2 to the air pump body 4. Thus, the user can easily interrupt the process of power supply from the power supply circuit 1 to the air pump body 4, and the working safety of the power supply circuit 1 is further improved.

It should be understood that the third trigger module and the fourth trigger module may be the same trigger module, such as the same button.

As shown in Fig. 7, in some embodiments, the power supply circuit 1 further comprises an alarm circuit 70. The alarm circuit 70 is connected to the main control circuit, and the main control circuit is configured to control the alarm circuit 70 to output an alarm signal, if it is detected that the energy storage unit 2 is not correctly connected to the power-supply switch circuit 20, or a voltage of the energy storage unit 2 connected to the power-supply switch circuit 20 does not exceed a preset voltage threshold, or the load 3 is reversely connected to the load-interface circuit 10.

It should be noted that the preset voltage threshold may be a first preset voltage threshold or a second preset voltage threshold.

It should also be noted that if the energy storage unit 2 is correctly connected to the power-supply switch circuit 20, the positive electrode of the energy storage unit 2 is connected to the positive input terminal B1, and the negative electrode of the energy storage unit 2 is connected to the negative input terminal B2. On the contrary, if the positive electrode of the energy storage unit 2 is connected to the negative input terminal B2, and the negative electrode of the energy storage unit 2 is connected to the positive input terminal B1, the energy storage unit 2 is in a state of reverse connection and is not correctly connected.

It should be understood that if the energy storage unit 2 is not correctly connected to the power-supply switch circuit 20, or the voltage of the energy storage unit 2 connected to the power-supply switch circuit 20 does not exceed the preset voltage threshold, the main control circuit 40 will detect through the first detection circuit 50 that the voltage of the energy storage unit 2 is less than or equal to the preset voltage threshold, and then control the alarm circuit 70 to output an alarm signal, so as to inform the user that the energy storage unit 2 connected to the power-supply switch circuit 20 is in an abnormal state, and remind the user to replace the energy storage unit 2, reconnect the energy storage unit 2 correctly, or charge the energy storage unit 2 in time.

As shown in Fig. 2 and Fig. 7, in some embodiments, an air pump body 4 is integrated into the power supply circuit 1.

If the air-pump switch circuit 30 connects the power supply path between the energy storage unit 2 and the air pump body 4, the air pump body 4 can operate under the power supply from the energy storage unit 2.

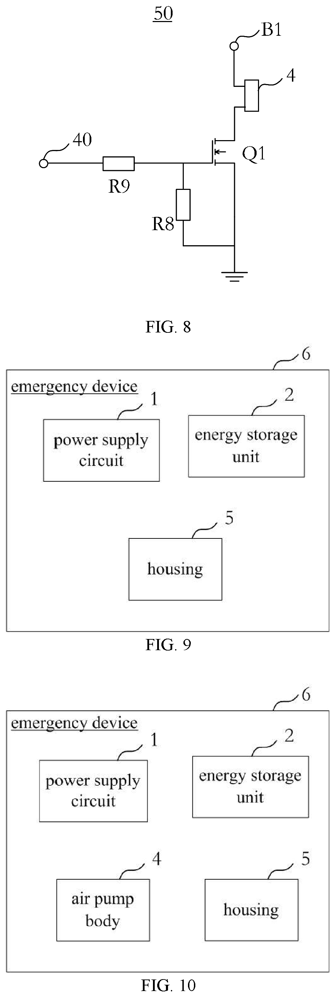

With reference to Fig. 8, Fig. 8 is a schematic diagram of circuit structure of an air-pump switch circuit of a power supply circuit provided in an embodiment of the present invention.

As shown in Fig. 8, in some embodiments, an air-pump switch circuit 30 comprises a switching transistor Q1. A terminal of an air pump body 4 is connected to a first terminal of the switching transistor Q1, and another terminal of the air pump body 4 is connected to an energy storage unit 2. A second terminal of the switching transistor Q1 is connected to ground, and a control terminal of the switching transistor Q1 is connected to the main control circuit.

If the control terminal of the switching transistor Q1 receives a second signal, a power supply path is formed by the energy storage unit 2, the air pump body 4, and the switching transistor Q1.

To be specific, the switching transistor Q1 has a first terminal, a second terminal, and a control terminal. The switching transistor Q1 can be switched between a state of connecting and a state of disconnecting, and a main control circuit 40 can control the switching transistor Q1 to switch between the state of connecting and the state of disconnecting, by outputting a control signal to the control terminal of the switching transistor Q1.

If the energy storage unit 2 and the air pump body 4 are both correctly connected to the power supply circuit 1, a terminal of the air pump body 4 is connected to a first terminal of the switching transistor Q1, another terminal of the air pump body 4 is connected to the energy storage unit 2, a second terminal of the switching transistor Q1 is connected to ground, and a control terminal of the switching transistor Q1 is connected to the main control circuit 40.

For example, if the control terminal of the switching transistor Q1 receives a third signal, the switching transistor Q1 is switched to a state of connecting, so that a power supply path is formed by the energy storage unit 2, the air pump body 4, and the switching transistor Q1. If the control terminal of the switching transistor Q1 receives a fourth signal, the switching transistor Q1 is switched to a state of disconnecting, so that the power supply path, which is formed by the energy storage unit 2, the air pump body 4, and the switching transistor Q1, is disconnected.

For example, the switching transistor Q1 may be one selected from an N-channel MOSFET, a P-channel MOSFET, a PNP transistor, and an NPN transistor.

In some embodiments, the air-pump switch circuit 30 further comprises an eighth resistor R8 and a ninth resistor R9. One terminal of the eighth resistor R8 is connected to the control terminal of the switching transistor Q1, and the other terminal is connected to ground. The ninth resistor R9 is connected between the main control circuit 40 and the control terminal of the switching transistor Q1. The eighth resistor R8 and the ninth resistor R9 are used for protecting the switching transistor Q1.

In some embodiments, the power supply circuit 1 further comprises a converting circuit 80.

The converting circuit 80 is used to connect the energy storage unit 2 and the main control circuit 40, and is configured to convert a power-supply voltage outputted by the energy storage unit 2 into a working voltage, and to output the working voltage to the main control circuit 40.

To be specific, the power-supply voltage outputted by the energy storage unit 2 is greater than the working voltage corresponding to the main control circuit 40. For example, the power-supply voltage outputted by the energy storage unit 2 is greater than 5 V, while the working voltage corresponding to the main control circuit 40 is 5 V.

Therefore, the power-supply voltage outputted by the energy storage unit 2 cannot be directly supplied to the main control circuit 40 for the operation of the main control circuit 40, and it may cause overvoltage damage to the main control circuit 40. Based on this, the converting circuit 80 is provided to connect the energy storage unit 2 to the main control circuit 40, so as to convert the power-supply voltage outputted by the energy storage unit 2 into a working voltage, and then output the working voltage to the main control circuit 40, so as to make the main control circuit 40 work normally and protect the main control circuit 40.

With reference to Fig. 9, Fig. 9 is a schematic module diagram of an emergency device 6 according to an embodiment of the present invention.

As shown in Fig. 9, the present invention further provides an emergency device 6. The emergency device 6 comprises a housing 5, an energy storage unit 2, and any one of the power supply circuits 1 provided in the embodiments of the present invention. The energy storage unit 2 and at least a part of the power supply circuit are located inside a housing 5.

For example, the emergency device 6 comprises an emergency starting power supply device and/or a battery clamp device for a vehicle.

To be specific, in the emergency device 6, the energy storage unit 2 may be connected to the power supply circuit 1, or may be directly provided in the power supply circuit 1. The power supply circuit 1 is used for connecting a load 3 located outside the emergency device 6, so that the energy storage unit 2 can provide emergency power to the load 3 through the power supply circuit 1. For example, the load 3 comprises at least one selected from a starter and a vehicle battery.

The power supply circuit 1 is also used for connecting the air pump body 4, so that the energy storage unit 2 can provide power support to the air pump body 4 through the power supply circuit 1, so that the air pump body 4 can inflate vehicle tires.

With reference to Fig. 10, Fig. 10 is a schematic diagram of an emergency device 6 provided in another embodiment of the present invention.

As shown in Fig. 10, the emergency device 6 further comprises an air pump body 4. That is to say, the air pump body 4 is provided within the emergency device 6, and an energy storage unit 2 provides power support to the air pump body 4 through a power supply circuit 1. Thus, the emergency device 6 is also used to inflate vehicle tires.

It should be understood that the terms used in the specification of the present invention are only for the purpose of describing specific embodiments and are not intended to limit the present invention. As used in the specification and the appended claims, the singular form like "a," "an," and "the" means comprising plural forms, unless the context clearly indicates otherwise. The terms "install," "connect," and "link" should be understood in a broad sense. For example, it can can be a fixed connection, a detachable connection, or an integrated connection; it can be a direct connection or an indirect connection through an intervening medium, or an internal communication between two components. For those skilled in the art, the specific meanings of the above terms in the present invention can be understood based on the specific context.

It should also be understood that the term "and/or" used in the description and the claims means and includes any and all possible combinations of one or more of the associated listed items. It should be noted that in this document, the term "include," "comprise," or any another variation thereof is intended to cover a non-exclusive inclusion, so that a process, method, article, or system, comprising a list of elements, includes not only those listed elements but also some other elements which are not expressly listed or which are inherent to such process, method, article, or system. Without further limitation, an element defined by the phrase "comprising a..." does not exclude the existence of other identical elements in the process, method, article, or system.

The serial numbers of the embodiments in the present invention are only used for description purposes and do not represent the superiority or inferiority of the embodiments. The above descriptions are only specific embodiments of the present invention, while the protection scope of the present invention is not limited thereto. Any equivalent modifications or substitutions that can be easily conceived should fall into the protection scope of the present invention. Therefore, the protection scope of the present invention shall be determined by the protection scope of the claims.

## Claims

1. A power supply circuit, comprising:
a load interface for connecting a load;
a power supply switch for connecting or disconnecting a circuit between an energy storage unit and the load interface;
a main control circuit, configured to control the power supply switch to be in a state of connecting or disconnecting, so as to connect or disconnect a power supply path between the energy storage unit and the load.

2. The power supply circuit according to claim 1, further comprising a first detection circuit; if the load interface is connected to a vehicle, the power supply circuit is able to detect an occurrence of an ignition start action of the vehicle, through the first detection circuit.

3. The power supply circuit according to claim 2, wherein the power supply circuit is so configured that if the first detection circuit detects the occurrence of the ignition start action, the main control circuit controls the power supply switch to connect the circuit; preferably, after the circuit has been connected for a certain period of time, the main control circuit automatically controls the power supply switch to disconnect the circuit.

4. The power supply circuit according to any one of claims 1 to 3, comprising a first detection circuit configured to detect a value of an electrical signal at the load interface, such as voltage.

5. The power supply circuit according to any one of claims 1 to 4, wherein
if it is detected that the value of the electrical signal at the load interface, such as voltage, decreases by more than a preset threshold within a preset duration, the main control circuit controls the power supply switch to be in a state of connecting;
preferably, after the circuit has been connected for a certain period of time, the main control circuit automatically controls the power supply switch to be in a state of disconnecting.

6. The power supply circuit according to any one of claims 1 to 5, further comprising an air pump switch, and the main control circuit is configured to control the air pump switch to be in a state of connecting or disconnecting.

7. The power supply circuit according to any one of claims 1 to 6, wherein the main control circuit is provided with at least one trigger module, which allows the user to select between at least two different modes.

8. The power supply circuit according to claim 7, wherein the power supply circuit is so configured that if the trigger module is not triggered, an ignition start mode is the default; and if the trigger module is triggered, a charging mode or an air pump mode is entered.

9. The power supply circuit according to claim 7, wherein the power supply circuit is so configured to enter different modes according to different trigger modules and/or different trigger actions.

10. The power supply circuit according to any one of claims 1 to 9, comprising a first detection circuit, wherein the first detection circuit is able to detect whether the load is reversely connected.

11. The power supply circuit according to any one of claims 1 to 10, comprising a second detection circuit, wherein the second detection circuit is configured to detect a status of the energy storage unit, such as remaining power and/or output voltage.

12. The power supply circuit according to any one of claims 1 to 11, comprising a first detection circuit, wherein the first detection circuit has at least two resistors in series, wherein one terminal of the two resistors in series is connected to the load interface, for connecting to a positive electrode of the load, and another terminal of the two resistors in series is connected to ground; preferably, the first detection circuit further includes a capacitor.

13. The power supply circuit according to any one of claims 1 to 12, further comprising an air-blowing switch, and the main control circuit is configured to control the air-blowing switch to be in a state of connecting or disconnecting.

14. The power supply circuit according to any one of claims 1 to 13, comprising the energy storage unit.

15. An emergency device, comprising a housing, an energy storage unit, and the power supply circuit according to any one of claims 1 to 12.

16. The emergency device according to claim 14, further comprising an air pump body and/or an air-blowing device.
